# EUROPEAN PATENT SPECIFICATION

(11) **EP 3 577 326 B1**
(45) Date of publication and mention of the grant of the patent: **06.11.2024**
(21) Application number: 17822057.0
(22) Date of filing: 15.09.2017
(51) Int. Cl.: F02B 23/06, F02F 3/28, F04B 39/00, F04B 53/14

(54) **PISTON MACHINE**
KOLBENMASCHINE
MACHINE À PISTON

(30) Priority: 01.02.2017 SI 201700032
(43) Date of publication of application: 11.12.2019
(73) Proprietor: Pecenko, Marta, 1000 Ljubljana (SI)
(72) Inventor: Pecenko, Marta, 1000 Ljubljana (SI)
(74) Representative: Borstar, Dusan
(86) International application number: PCT/SI2017/000024
(87) International publication number: WO 2018/143897

(56) References cited:
- GB-A- 1 146 589
- US-A- 1 662 553
- US-A- 1 846 656
- US-A- 1 990 618
- US-A- 2 709 992
- US-A- 2 898 894

## Description

The present invention refers to a piston machine, in particular to an internal combustion engine, which operates either as a gasoline or diesel internal combustion engine. In accordance with the International patent classification such inventions belong to pistons and cylinders of piston machines, which are characteristic with respect to material, of which they are made.

The purpose of the invention is to create a piston machine, in which both a cylinder and also a piston, which is translatory-oscillating movable to and from within said cylinder, could be made of materials on the basis of ceramics, and in addition to that, when such machine is used as a gasoline or diesel internal combustion engine, then the combustion of each fuel within a combustion chamber could be essentially improved, which would then lead to essentially decreasing of harmful combustion gasses, in particular of NO and NO₂, i.e. NOₓ, when compared with currently known gasoline or diesel internal combustion engines.

Piston machines as such are known to persons skilled in the art. Such machine generally consists of at least one working cylinder, in which on the one hand in a tightly matching manner a piston is inserted, which is translatory oscillating movable to and fro along the interior of said cylinder. A piston rod is pivotally connected to said piston, which is on the other end mounted on an eccentric crank shaft. Said cylinder is on the opposite side closed by an engine head, in which valves are embedded, which serve for establishing of interaction between a combustion chamber, which is available within the cylinder between the front surface of the piston and said engine head, and appropriate manifolds, which are located outside of the cylinder. Such piston machine may generally operate either as a pump/compressor or also as an internal combustion engine. When the machine is functioning as an internal combustion engine, such engine is furnished with a fuel supplying manifold, which is communicating with an aperture in the area of a combustion chamber, which is in the need i.e. during combustion of the fuel and releasing of exhaust gases sealed by means of a valve, as well as an aperture for releasing of exhaust gases, which is in the need i.e. during compression and delivery each fuel into said combustion chamber also closed by a valve. Sealing between the surface of the piston and the internal surface of the cylinder us usually assured by means of piston rings. Due to compression and exhaustion of the fuel a heat is generated within said exhaustion chamber, and consequently the temperature therein is extremely high, so that all machine components, which serve for limiting said combustion chamber are exposed to extremely high mechanic and thermic stresses.

Piston machines are also mentioned in prior art documents, wherein such machines include a piston consisting of ceramics, which however means, that merely just a front surface of the piston, which is exposed to high temperatures within a combustion chamber, is made of ceramics. Such pistons are disclosed in JP S 6093161 A (Isuzu Motors Ltd), JP S 60101247 A (Riken KK), JP S 56118538 A (Toyota Motor Co Ltd) and US4306489 A (Exxon Research Engineering Co).

Piston machines are also disclosed in US 1 662 553 A and US 1 990 618 A.

The present invention refers to a piston machine, according to the attached claims. Such machine comprises at least one operating cylinder with at least one smooth internal surface area, and within said cylinder a piston is tightly matching inserted, which is translatory oscillating movable to and fro in the axial direction of said cylinder along said internal surface area thereof. Said piston is in an open first end portion of said cylinder furnished with a piston rod and is pivotally around a transversal diametrical axis, which extends perpendicularly with respect to the previously mentioned longitudinal axis of the cylinder, connected with its first end portion, wherein the second portion of said piston rod is embedded on an eccentric crank shaft. The second end portion of the cylinder is closed, optionally by means of a cylinder head, and each combustion chamber of the engine in each position of said piston during its movement along said axial direction of the cylinder is defined with said internal surface area of the cylinder, the closed end portion of said cylinder as well as with a front surface of the piston. Said cylinder is in the area of said combustion chamber furnished with at least one aperture, which is sealable by means of a valve and is adapted for transporting each media towards the interior of the cylinder, as well as at least one aperture which is sealable by means of a valve and is adapted for transporting each media from the interior of the cylinder towards the exterior thereof. The combustion chamber within the cylinder is in a direction away from said piston rod extended by a conical chamber having a pre-determined angle of its tip. Said piston is on its side, which is faced away from the piston rod, furnished with a truncated conical protrusion having a pre-determined angle of its tip, wherein said angle on said protrusion on the piston is determined in such way that said truncated conical protrusion on the piston is insertable into said conical chamber in the cylinder. Moreover, such engine is optionally furnished with a suitable control assembly, which is adapted for closing and opening said apertures by means of said valves depending on each position of the piston within the cylinder.

The invention provides that said smooth internal surface area of the cylinder is on its side, which is faced away from the piston rod, ended with a radially inwards protruding upper rectangular step, and on the opposite side, which is faced towards the piston rod, with a radially inwards protruding lower rectangular step. Said piston is on its side, which is faced away from the piston rod, furnished with a radially outwards protruding rim, the outer diameter of which is adjusted on the one hand to the internal diameter of said smooth internal surface area of the cylinder and on the other hand also to said steps. Moreover, said apertures, which are sealable by means of said valves and are suitable for transporting of media into or from said cylinder, are arranged in the area of said smooth cylindrical internal surface area between said steps.

In one of possible embodiments said apertures for transporting media towards the interior of the cylinder and outside from said cylinder, which are arranged in the area of said smooth cylindrical internal surface area of the cylinder between said steps are arranged in such manner, that in the first terminal position of the piston i.e. in position of compression in which its protrusion is located within the conical chamber of the cylinder, said apertures which are sealable by means of valves, are located between the rim of the piston and the lower step of the smooth cylindrical internal surface area of the cylinder, while in the second terminal position of the piston, i.e. in position of expansion, said apertures which are sealable by means of said valves are located between the rim of the piston and the upper step of the smooth cylindrical internal surface area of the cylinder. In this, said cylinder is in the area of said chamber furnished with at least one aperture serving for ignition of fuel in the area of said combustion chamber.

The invention further provides a possibility, according to which said angle on the truncated conical protrusion of the piston either at least approximately corresponds to said angle on the tip of said conical chamber within the cylinder, or is smaller than said angle on the tip of said conical chamber within the cylinder.

Moreover, a fuel injection device can be mounted in the area of said fuel ignition aperture in the combustion chamber, or an ignition plug for ignition of a mixture of fuel and air is mounted in the area of a fuel ignition aperture in the combustion chamber.

In a further embodiment of the invention, an electric ignition plug for ignition of a mixture of fuel and air is mounted in at least one of said fuel ignition apertures in the combustion chamber.

In a still further embodiment of the invention, an injection nozzle into combustion chamber is mounted in at least one of said fuel ignition apertures in said combustion chamber.

Moreover, said cylinder is furnished with at least one sensor, which is located in the area of said conical chamber and is suitable for monitoring temperature within the combustion chamber, and/or at least one sensor, which is located in the area of said conical chamber and is suitable for monitoring pressure within the combustion chamber.

Said piston is furnished with a circumferential groove, which is located between its rim and its end portion, which is faced towards the piston rod.

Now the invention will be described on the basis of embodiments as presented in the enclosed drawings, wherein
- Fig. 1: is a cross-section of a piston machine along its diametrical plane and the state, in which the piston is located closely to its utmost lower position i.e. proximately to the crank shaft; and
- Fig. 2: is analogous cross-section of a piston machine along its diametrical plane in the state, in which the piston is located closely to its upper position i.e. at approximately the maximum distance apart from the crank shaft.

The invention refers to a piston machine, which is either a gasoline or diesel internal combustion engine. Such engine comprises at least one operating cylinder 1 with at least one smooth internal surface area 10, and within said cylinder 1 there is tightly matching inserted a piston 2, which is translatory oscillating movable to and fro in the axial direction X of said cylinder 1 along said internal surface area 10 thereof.

Said piston 2 is in an open first end portion 11 of said cylinder 1 furnished with a piston rod 3 and is pivotally around a transversal diametrical axis Y, which extends perpendicularly with respect to the previously mentioned longitudinal axis X of the cylinder 1, connected with its first end portion 31. The second end portion 32 of said piston rod 3 is embedded on an eccentric crank shaft 4. The second end portion 12 of the cylinder 1 is closed, optionally by means of a cylinder head 5. Each combustion chamber 6 of said engine in each position of said piston 2 during its movement along said axial direction X of the cylinder 1 is defined with said internal surface area 11 of the cylinder, the closed end portion 12 of said cylinder 1 as well as with a front surface 20 of the piston 2.

Said cylinder 1 is in the area of said combustion chamber 6 furnished with at least one aperture 151, which is sealable by means of a valve 151' and is adapted for transporting each media towards the interior of the cylinder 1, as well as at least one aperture 152, which is sealable by means of a valve 152' and is adapted for transporting each media from the interior of the cylinder 1 towards the exterior thereof.

Said engine is furthermore optionally furnished with a suitable control assembly 7, which is adapted for closing and opening said apertures 151, 152 by means of said valves 151', 152' with respect to each position of the piston 2 within the cylinder 1.

Said smooth internal surface area 10 of the cylinder 1 is on its side, which is faced away from the piston rod 3, ended with a radially inwards protruding upper rectangular step 111, and on the opposite side, which is faced towards the piston rod 3, with a radially inwards protruding lower rectangular step 112.

The combustion chamber 6 within the cylinder 1 is in a direction away from said piston rod 1 extended by a conical chamber 11 having a pre-determined angle α of its tip 110, while the piston 2 is on its side, which is faced away from the piston rod 3, furnished with a radially outwards protruding rim 21, the outer diameter of which is adjusted on the one hand to the internal diameter of said smooth internal surface area 10 of the cylinder 1 and on the other hand also to said steps 111, 112. Moreover, said piston 2 is on its side, which is faced away from the piston rod 3, furnished with a truncated conical protrusion 22 having a pre-determined angle β of its tip 210, wherein said angle β on said protrusion 22 on the piston 2 is determined in such way that said truncated conical protrusion 22 on the piston 2 is insertable into said conical chamber 11 in the cylinder 1.

Said apertures 151, 152, which are sealable by means of said valves 151', 152' and are suitable for transporting of media into or from said cylinder 1, are arranged in the area of said smooth cylindrical internal surface area 10 between said steps 111, 112.

In one of possible embodiments of the invention said apertures 151, 152 for transporting media towards the interior of the cylinder 1 and outside from said cylinder 1, which are arranged in the area of said smooth cylindrical internal surface area 10 of the cylinder 1 between said steps 111, 112 are arranged in such manner, that in the first terminal position of the piston 2 i.e. in position of compression in which its protrusion 21 is located within the conical chamber 11 of the cylinder 1, and said apertures 151, 152, which are sealable by means of valves 151', 152', are located between the rim 21 of the piston 2 and the lower step 112 of the smooth cylindrical internal surface area 10 of the cylinder 1, while in the second terminal position of the piston 2, i.e. in position of expansion, said apertures 151, 152, which are sealable by means of valves 151', 152' are located between the rim 21) of the piston 2 and the upper step 111 of the smooth cylindrical internal surface area 10 of the cylinder 1. Said cylinder 1 is in the area of said chamber 11 furnished with at least one aperture 14, 14' serving for ignition of fuel in the area of said combustion chamber 6.

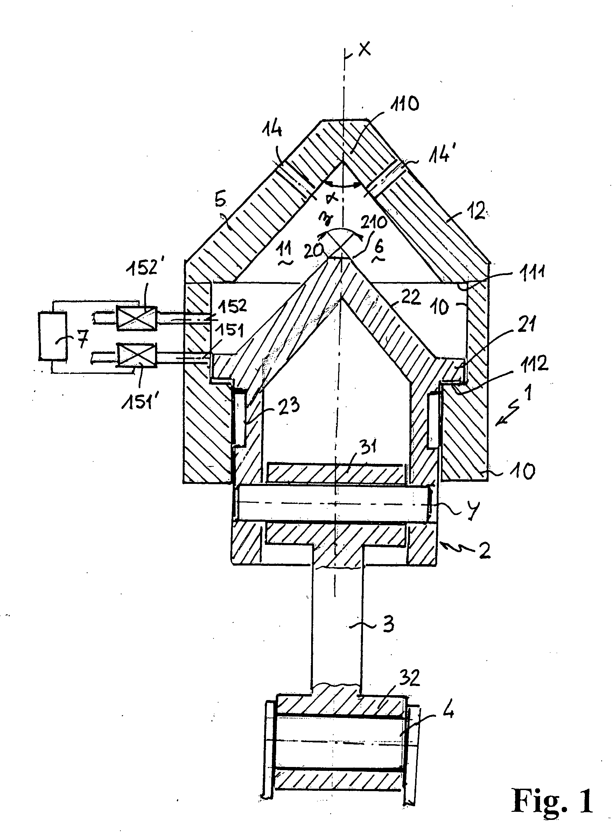

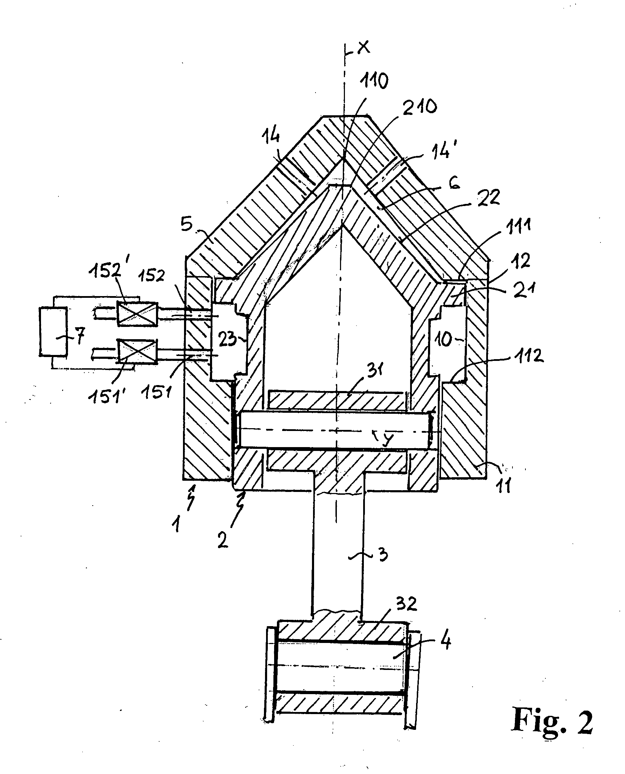

Said angle β on the truncated conical protrusion 21 of the piston 2 either at least approximately corresponds to said angle α on the tip 110 of said conical chamber 11 within the cylinder 1, or can be - like in Figs. 1 and 2 - smaller than said angle α on the tip 110 of said conical chamber 11 within the cylinder 1.

A fuel injection device can be mounted in the area of said fuel ignition aperture 14, 14' in the combustion chamber 6, in addition to which optionally also an ignition plug for ignition of a mixture of fuel and air is mounted in the area of said fuel ignition aperture (14, 14') in the combustion chamber (6).

It is also possible that only an electric ignition plug for ignition of a mixture of fuel and air can be mounted in the area of the combustion chamber 6.

When the machine is used as a diesel engine, a fuel injection nozzle is mounted in the area of said fuel ignition aperture 14, 14' in the combustion chamber 6.

Said cylinder 1 is moreover optionally furnished with at least one sensor, which is located in the area of said conical chamber 11 and is suitable for monitoring temperature within the combustion chamber 6 and/or with at least one sensor, which is located in the area of said conical chamber 11 and is suitable for monitoring pressure within the combustion chamber 6.

The piston 2 can be also furnished with a circumferential groove 23, which is located between its rim 21 and its end portion, which is faced towards the piston rod 3.

Each displacement of a piston 2 results in movement of the piston rod 3 and consequently rotation of the crank shaft 4. By opening of one of said apertures 151, 152 and downwardly movement the piston 2 the air or optionally a mixture of fuel and air is enabled to enter the combustion chamber 6, upon which the piston 2 starts moving upwards, by which the air or the mixture of fuel and air is compressed, upon which either due the compression itself and injected fuel or by means of an ignition plug combustion of such compressed mixture of the fuel and air is initiated, which results to displacement of the piston 2 towards the crank shaft 4, by which also each generated exhaust gases are allowed to flow exit the combustion chamber through the residual aperture 151, 152 towards the exhausting manifold, which is as such not shown in the drawings. Upon that, the described sequence of strokes is repeated.

## Claims

1. Piston machine, which is suitable for operating as an internal combustion engine, comprising at least one operating cylinder (1) with at least one smooth internal surface area (10), and within said cylinder (1) there is tightly matching inserted a piston (2), which is translatory oscillating movable to and fro in the axial direction (X) of said cylinder (1) along said internal surface area (10) thereof, wherein said piston (2) is in an open first end portion (11) of said cylinder (1) furnished with a piston rod (3) and is pivotally around a transversal diametrical axis (Y), which extends perpendicularly with respect to the previously mentioned longitudinal axis (X) of the cylinder (1), connected with its first end portion (31), wherein the second end portion (32) of said piston rod (3) is embedded on an eccentric crank shaft (4), and wherein the second end portion (12) of the cylinder (1) is closed, optionally by means of a cylinder head (5), and wherein each combustion chamber (6) of the engine in each position of said piston (2) during its movement along said axial direction (X) of the cylinder (1) is defined with said internal surface area (11) of the cylinder, the closed end portion (12) of said cylinder (1) as well as with a front surface (20) of the piston (2), and wherein said cylinder (1) is in the area of said combustion chamber (6) furnished with at least one aperture (151), which is sealable by means of a valve (151') and is adapted for transporting each media towards the interior of the cylinder (1), as well as at least one aperture (152) which is sealable by means of a valve (152') and is adapted for transporting each media from the interior of the cylinder (1) towards the exterior thereof, whereas said engine is furthermore optionally furnished with a suitable control assembly (7), which is adapted for closing and opening said apertures (151, 152) by means of said valves (151', 152') with respect to each position of the piston (2) within the cylinder (1), wherein the combustion chamber (6) within the cylinder (1) is in a direction away from said piston rod (3) extended by a conical chamber (11) having a pre-determined angle (α) of its tip (110), and wherein said piston (2) is on its side, which is faced away from the piston rod (3), furnished with a truncated conical protrusion (22) having a pre-determined angle (β) of its tip (210), wherein said angle (β) on said protrusion (22) on the piston (2) is determined in such way that said truncated conical protrusion (22) on the piston (2) is insertable into said conical chamber (11) in the cylinder (1), **characterized in that** said smooth internal surface area (10) of the cylinder (1) is on its side, which is faced away from the piston rod (3), ended with a radially inwards protruding upper rectangular step (111), and on the opposite side, which is faced towards the piston rod (3), with a radially inwards protruding lower rectangular step (112), while the piston (2) is on its side, which is faced away from the piston rod (3), furnished with a radially outwards protruding rim (21), the outer diameter of which is adjusted on the one hand to the internal diameter of said smooth internal surface area (10) of the cylinder (1) and on the other hand also to said steps (111, 112), **and in that** said apertures (151, 152), which are sealable by means of said valves (151', 152') and are suitable for transporting of media into or from said cylinder (1), are arranged in the area of said smooth cylindrical internal surface area (10) between said steps (111, 112).

2. Piston machine according to Claim 1, **characterized in that** said apertures (151, 152) for transporting media towards the interior of the cylinder (1) and outside from said cylinder (1), which are arranged in the area of said smooth cylindrical internal surface area (10) of the cylinder (1) between said steps (111, 112) are arranged in such manner, that in the first terminal position of the piston (2) i.e. in position of compression in which its protrusion (21) is located within the conical chamber (11) of the cylinder (1), said apertures (151, 152) which are sealable by means of valves (151', 152') are located between the rim (21) of the piston (2) and the lower step (112) of the smooth cylindrical internal surface area (10) of the cylinder (1), while in the second terminal position of the piston (2), i.e. in position of expansion, said apertures (151, 152) which are sealable by means of valves (151', 152') are located between the rim (21) of the piston (2) and the upper step (111) of the smooth cylindrical internal surface area (10) of the cylinder (1), and wherein said cylinder (1) is in the area of said chamber (11) furnished with at least one aperture (14, 14') serving for ignition of fuel in the area of said combustion chamber (6).

3. Piston machine according to Claim 1 or 2, **characterized in that** said angle (β) on the truncated conical protrusion (21) of the piston (2) at least approximately corresponds to said angle (α) on the tip (110) of said conical chamber (11) within the cylinder (1).

4. Piston machine according to Claim 1 or 2, **characterized in that** said angle (β) on the truncated conical protrusion (21) of the piston (2) is smaller than the angle (α) on the tip (110) of said conical chamber (11) within the cylinder (1).

5. Piston machine according to anyone of Claims 1 - 4, **characterized in that** a fuel injection device is mounted in the area of said fuel ignition aperture (14, 14') in the combustion chamber (6).

6. Piston machine according to anyone of Claims 1 - 4, **characterized in that** an ignition plug for ignition of a mixture of fuel and air is mounted in the area of said fuel ignition aperture (14, 14') in the combustion chamber (6).

7. Piston machine according to Claim 5, **characterized in that** an electric ignition plug for ignition of a mixture of fuel and air is mounted in the area of one of said fuel ignition apertures (14, 14') in the combustion chamber (6).

8. Piston machine according to anyone of Claims 1 - 7, **characterized in that** a fuel injection nozzle is mounted in the area of said fuel ignition aperture (14, 14') in the combustion chamber (6).

9. Piston machine according to anyone of Claims 1 - 8, **characterized in that** said cylinder (1) is furnished with at least one sensor, which is located in the area of said conical chamber (11) and is suitable for monitoring temperature within the combustion chamber (6).

10. Piston machine according to anyone of Claims 1 - 9, **characterized in that** said cylinder (1) is furnished with at least one sensor, which is located in the area of said conical chamber (11) and is suitable for monitoring pressure within the combustion chamber (6).

11. Piston machine according to anyone of Claims 1 - 10, **characterized in that** said piston (2) is furnished with a circumferential groove (23), which is located between its rim (21) and its end portion, which is faced towards the piston rod (3).

## Patentansprüche

1. Kolbenmaschine, die zum Betrieb als Verbrennungsmotor geeignet ist, mit mindestens einem Arbeitszylinder (1) mit mindestens einem glatten Innenflächenbereich (10), und wobei in dem Zylinder (1) ein Kolben (2) dicht passend eingesetzt ist, der in axialer Richtung (X) des Zylinders (1) entlang des Innenflächenbereichs (10) translatorisch oszillierend hin und her bewegbar ist, wobei der Kolben (2) in einem offenen ersten Endabschnitt (11) des Zylinders (1) mit einer Kolbenstange (3) versehen ist und um eine diametrale Querachse (Y), die sich senkrecht zur zuvor erwähnten Längsachse (X) des Zylinders (1) erstreckt, schwenkbar mit ihrem ersten Endabschnitt (31) verbunden ist, wobei der zweite Endabschnitt (32) der Kolbenstange (3) auf einer exzentrischen Kurbelwelle (4) gelagert ist, und wobei der zweite Endabschnitt (12) des Zylinders (1) geschlossen ist, gegebenenfalls mittels eines Zylinderkopfes (5), und wobei jede Verbrennungskammer (6) des Motors in jeder Position des Kolbens (2) während seiner Bewegung entlang der axialen Richtung (X) des Zylinders (1) mit dem Innenflächenbereich (11) des Zylinders, dem geschlossenen Endabschnitt (12) des Zylinders (1) sowie mit einer vorderen Oberfläche (20) des Kolbens (2) definiert ist, und wobei der Zylinder (1) in dem Bereich der Verbrennungskammer (6) mit mindestens einer Öffnung (151) versehen ist, die mittels eines Ventils (151') verschließbar ist und dazu geeignet ist, jedes Medium in das Innere des Zylinders (1) zu transportieren, sowie mit mindestens einer Öffnung (152), die mittels eines Ventils (152') verschließbar ist und dazu geeignet ist, jedes Medium aus dem Inneren des Zylinders (1) nach außen zu transportieren, wohingegen der Motor ferner optional mit einer geeigneten Steuereinheit (7) versehen ist, die dazu geeignet ist, die Öffnungen (151, 152) mittels der Ventile (151', 152') in Bezug auf jede Position des Kolbens (2) innerhalb des Zylinders (1) zu schließen und zu öffnen, wobei die Verbrennungskammer (6) innerhalb des Zylinders (1) in einer Richtung weg von der Kolbenstange (3) durch eine konische Kammer (11) mit einem vorbestimmten Winkel (α) ihrer Spitze (110) verlängert ist, und wobei der Kolben (2) auf seiner Seite, die von der Kolbenstange (3) abgewandt ist, mit einem kegelstumpfförmigen Vorsprung (22) mit einem vorbestimmten Winkel (β) seiner Spitze (210) versehen ist, wobei der Winkel (β) an dem Vorsprung (22) an dem Kolben (2) derart bestimmt ist, dass der kegelstumpfförmige Vorsprung (22) an dem Kolben (2) in die konische Kammer (11) in dem Zylinder (1) einführbar ist, **dadurch gekennzeichnet, dass** der glatte Innenflächenbereich (10) des Zylinders (1) auf seiner Seite, die von der Kolbenstange (3) abgewandt ist, mit einer radial nach innen vorspringenden oberen rechteckigen Stufe (111) endet, und auf der entgegengesetzten Seite, die der Kolbenstange (3) zugewandt ist, mit einer radial nach innen vorspringenden unteren rechteckigen Stufe (112) endet, während der Kolben (2) auf seiner Seite, die der Kolbenstange (3) abgewandt ist, mit einem radial nach außen vorstehenden Rand (21) versehen ist, dessen Außendurchmesser einerseits an den Innendurchmesser des glatten Innenflächenbereichs (10) des Zylinders (1) und andererseits auch an die Stufen (111, 112) angepasst ist, und **dadurch, dass** diese Öffnungen (151, 152), die mittels der Ventile (151', 152') verschließbar und zum Transport von Medien in oder aus dem Zylinder (1) geeignet sind, in dem Bereich der glatten zylindrischen Innenflächenbereichs (10) zwischen den Stufen (111, 112) angeordnet sind.

2. Kolbenmaschine nach Anspruch 1, **dadurch gekennzeichnet, dass** die Öffnungen (151, 152) zum Transport von Medien in das Innere des Zylinders (1) und aus dem Zylinder (1) heraus, welche im Bereich des glatten zylindrischen Innenflächenbereichs (10) des Zylinders (1) zwischen den Stufen (111, 112) angeordnet sind, so angeordnet sind, dass in der ersten Endstellung des Kolbens (2), d. h. in der Kompressionsstellung, in der sich sein Vorsprung (21) in der konischen Kammer (11) des Zylinders (1) befindet, die mittels der Ventile (151', 152') verschließbaren Öffnungen (151, 152) sich zwischen dem Rand (21) des Kolbens (2) und der unteren Stufe (112) des glatten zylindrischen Innenflächenbereichs (10) des Zylinders (1) befinden, während in der zweiten Endstellung des Kolbens (2), d.h. in der Expansionsstellung, die mittels der Ventile (151', 152') verschließbaren Öffnungen (151, 152) sich zwischen dem Rand (21) des Kolbens (2) und der oberen Stufe (111) des glatten zylindrischen Innenflächenbereichs (10) des Zylinders (1) befinden, und wobei der Zylinder (1) im Bereich der Kammer (11) mit mindestens einer Öffnung (14, 14') versehen ist, die zur Zündung von Kraftstoff im Bereich der Brennkammer (6) dient.

3. Kolbenmaschine nach Anspruch 1 oder 2, **dadurch gekennzeichnet, dass** der Winkel (β) an dem kegelstumpfförmigen Vorsprung (21) des Kolbens (2) zumindest annähernd dem Winkel (α) an der Spitze (110) der konischen Kammer (11) innerhalb des Zylinders (1) entspricht.

4. Kolbenmaschine nach Anspruch 1 oder 2, **dadurch gekennzeichnet, dass** der Winkel (β) an dem kegelstumpfförmigen Vorsprung (22) des Kolbens (2) kleiner ist als der Winkel (α) an der Spitze (110) der konischen Kammer (11) innerhalb des Zylinders (1).

5. Kolbenmaschine nach einem der Ansprüche 1 bis 4, **dadurch gekennzeichnet, dass** eine Kraftstoffeinspritzvorrichtung im Bereich der Kraftstoffzündöffnung (14, 14') im Brennraum (6) angeordnet ist.

6. Kolbenmaschine nach einem der Ansprüche 1 bis 4, **dadurch gekennzeichnet, dass** eine Zündkerze zur Zündung eines Kraftstoff-Luft-Gemisches im Bereich der Kraftstoffzündöffnung (14, 14') im Brennraum (6) angeordnet ist.

7. Kolbenmaschine nach Anspruch 5, **dadurch gekennzeichnet, dass** eine elektrische Zündkerze zur Zündung eines Kraftstoff-Luft-Gemisches im Bereich einer der Kraftstoffzündöffnungen (14, 14') im Brennraum (6) angeordnet ist.

8. Kolbenmaschine nach einem der Ansprüche 1 bis 7, **dadurch gekennzeichnet, dass** eine Kraftstoffeinspritzdüse im Bereich der Kraftstoffzündöffnung (14, 14') im Brennraum (6) angeordnet ist.

9. Kolbenmaschine nach einem der Ansprüche 1 bis 8, **dadurch gekennzeichnet, dass** der Zylinder (1) mit mindestens einem Sensor ausgestattet ist, der sich im Bereich der konischen Kammer (11) befindet und zur Überwachung der Temperatur innerhalb des Brennraums (6) geeignet ist.

10. Kolbenmaschine nach einem der Ansprüche 1 bis 9, **dadurch gekennzeichnet, dass** der Zylinder (1) mit mindestens einem Sensor ausgestattet ist, der sich im Bereich der konischen Kammer (11) befindet und zur Überwachung des Drucks innerhalb des Brennraums (6) geeignet ist.

11. Kolbenmaschine nach einem der Ansprüche 1 bis 10, **dadurch gekennzeichnet, dass** der Kolben (2) mit einer Umfangsnut (23) ausgestattet ist, die sich zwischen seinem Rand (21) und seinem der Kolbenstange (3) zugewandten Endabschnitt befindet.

## Revendications

1. Machine à piston, qui convient à une exploitation en tant que moteur à combustion interne, comprenant au moins un cylindre de commande (1) avec au moins une surface interne lisse (10), et à l'intérieur dudit cylindre (1) il y a un piston (2) inséré à ajustement serré, qui est déplaçable en va-et-vient avec une oscillation par translation dans la direction axiale (X) dudit cylindre (1) le long de ladite surface interne (10) de celui-ci, dans laquelle ledit piston (2) est dans une première partie d'extrémité ouverte (11) dudit cylindre (1) muni d'une tige de piston (3) et est en pivotement autour d'un axe diamétrique transversal (Y), qui s'étend perpendiculairement par rapport à l'axe longitudinal mentionné antérieurement (X) du cylindre (1), raccordé à sa première partie d'extrémité (31), dans laquelle la deuxième partie d'extrémité (32) de ladite tige de piston (3) est imbriquée sur un vilebrequin excentrique (4), et dans laquelle la deuxième partie d'extrémité (12) du cylindre (1) est fermée, éventuellement au moyen d'une tête de cylindre (5), et dans laquelle chaque chambre de combustion (6) du moteur dans chaque position dudit piston (2) au cours de son déplacement le long de ladite direction axiale (X) du cylindre (1) est définie avec ladite surface interne (11) du cylindre, la partie d'extrémité fermée (12) dudit cylindre (1) ainsi qu'avec une surface avant (20) du piston (2), et dans laquelle ledit cylindre (1) est dans la zone de ladite chambre de combustion (6) munie d'au moins une ouverture (151), qui peut être scellée au moyen d'une soupape (151') et est adaptée pour le transport de chaque milieu vers l'intérieur du cylindre (1), ainsi qu'au moins une ouverture (152) qui peut être scellée au moyen d'une soupape (152') et est adaptée pour le transport de chaque milieu à partir de l'intérieur du cylindre (1) vers l'extérieur de celui-ci, tandis que ledit moteur est de plus éventuellement muni d'un ensemble de commande adapté (7), qui est adapté pour la fermeture et l'ouverture desdites ouvertures (151, 152) au moyen desdites soupapes (151', 152') par rapport à chaque position du piston (2) à l'intérieur du cylindre (1), dans laquelle la chambre de combustion (6) à l'intérieur du cylindre (1) est dans une direction à l'écart de ladite tige de piston (3) étendue par une chambre conique (11) possédant un angle prédéterminé (α) de son sommet (110), et dans laquelle ledit piston (2) est sur son côté, qui est tourné à l'opposé de la tige de piston (3), munie d'une saillie tronconique (22) possédant un angle prédéterminé (β) de son sommet (210), dans laquelle ledit angle (β) sur ladite saillie (22) sur le piston (2) est déterminé de telle manière que ladite saillie tronconique (22) sur le piston (2) peut être insérée dans ladite chambre conique (11) dans le cylindre (1), **caractérisé en ce que** ladite surface interne lisse (10) du cylindre (1) est sur son côté, qui est tourné à l'opposé de la tige de piston (3), terminé par un palier rectangulaire supérieur radialement en saillie vers l'intérieur (111), et sur le côté opposé, qui est tourné vers la tige de piston (3), avec un palier rectangulaire inférieur radialement en saillie vers l'intérieur (112), pendant que le piston (2) est sur son côté, qui est tourné à l'opposé de la tige de piston (3), munie d'un rebord en saillie radialement vers l'extérieur (21), dont le diamètre extérieur est ajusté d'une part sur le diamètre interne de ladite surface interne lisse (10) du cylindre (1) et d'autre part également sur lesdits paliers (111, 112), et **en ce que** lesdites ouvertures (151, 152), qui peuvent être scellées au moyen desdites soupapes (151', 152') et sont adaptées pour le transport de milieux dans ou à partir dudit cylindre (1), sont agencées dans la zone de ladite surface interne cylindrique lisse (10) entre lesdits paliers (111, 112).

2. Machine à piston selon la revendication 1, **caractérisée en ce que** lesdites ouvertures (151, 152) destinées au transport de milieux vers l'intérieur du cylindre (1) et à l'extérieur dudit cylindre (1), qui sont agencées dans la zone de ladite surface interne cylindrique lisse (10) du cylindre (1) entre lesdits paliers (111, 112) sont agencées de telle manière que, dans la première position terminale du piston (2), c'est-à-dire dans une position de compression dans laquelle sa saillie (21) se situe à l'intérieur de la chambre conique (11) du cylindre (1), lesdites ouvertures (151, 152) qui peuvent être scellées au moyen de soupapes (151', 152') se situent entre le rebord (21) du piston (2) et le palier inférieur (112) de la surface interne cylindrique lisse (10) du cylindre (1), pendant qu'elles sont dans la deuxième position terminale du piston (2), c'est-à-dire dans une position d'expansion, lesdites ouvertures (151, 152) qui peuvent être scellées au moyen de soupapes (151', 152') se situent entre le rebord (21) du piston (2) et le palier supérieur (111) de la surface interne cylindrique lisse (10) du cylindre (1), et dans laquelle ledit cylindre (1) est dans la zone de ladite chambre (11) munie d'au moins une ouverture (14, 14') servant à l'allumage de carburant dans la zone de ladite chambre de combustion (6).

3. Machine à piston selon la revendication 1 ou 2, **caractérisée en ce que** ledit angle (β) sur la saillie tronconique (21) du piston (2) correspond au moins approximativement audit angle (α) sur le sommet (110) de ladite chambre conique (11) à l'intérieur du cylindre (1).

4. Machine à piston selon la revendication 1 ou 2, **caractérisée en ce que** ledit angle (β) sur la saillie tronconique (21) du piston (2) est plus petit que l'angle (α) sur le sommet (110) de ladite chambre conique (11) à l'intérieur du cylindre (1).

5. Machine à piston selon l'une quelconque des revendications 1 à 4, **caractérisée en ce qu'**un dispositif d'injection de carburant est monté dans la zone de ladite ouverture d'allumage de carburant (14, 14') dans la chambre de combustion (6).

6. Machine à piston selon l'une quelconque des revendications 1 à 4, **caractérisée en ce qu'**une bougie d'allumage destinée à l'allumage d'un mélange de carburant et d'air est montée dans la zone de ladite ouverture d'allumage de carburant (14, 14') dans la chambre de combustion (6).

7. Machine à piston selon la revendication 5, **caractérisée en ce qu'**une bougie d'allumage électrique destinée à l'allumage d'un mélange de carburant et d'air est montée dans la zone d'une desdites ouvertures d'allumage de carburant (14, 14') dans la chambre de combustion (6).

8. Machine à piston selon l'une quelconque des revendications 1 à 7, **caractérisée en ce qu'**une buse d'injection de carburant est montée dans la zone de ladite ouverture d'allumage de carburant (14, 14') dans la chambre de combustion (6).

9. Machine à piston selon l'une quelconque des revendications 1 à 8, **caractérisée en ce que** ledit cylindre (1) est muni d'au moins un capteur, qui se situe dans la zone de ladite chambre conique (11) et convient à la surveillance de la température à l'intérieur de la chambre de combustion (6).

10. Machine à piston selon l'une quelconque des revendications 1 à 9, **caractérisée en ce que** ledit cylindre (1) est muni d'au moins un capteur, qui se situe dans la zone de ladite chambre conique (11) et convient à la surveillance de la pression à l'intérieur de la chambre de combustion (6).

11. Machine à piston selon l'une quelconque des revendications 1 à 10, **caractérisée en ce que** ledit piston (2) est muni d'une rainure circonférentielle (23), qui se situe entre son rebord (21) et sa partie d'extrémité, qui est tournée vers la tige de piston (3).
